# EUROPEAN PATENT APPLICATION

(11) **EP 1 452 083 A2**
(43) Date of publication of application: **01.09.2004**
(21) Application number: 04445011.2
(22) Date of filing: 11.02.2004
(51) Int. Cl.: A01D 34/66

(54) **Track propelled turf care device**

(30) Priority: 11.02.2003 US 446902 P; 10.02.2004 US 776000 P
(71) Applicant: Textron Inc., Providence, Rhode Island 02903 (US)
(72) Inventor: Meier, Thomas L., Dalton, Ohio 44618 (US); Weber, Anthony, Lake Mills, Wisconsin 53551 (US); Thompson, Joseph, York, South Carolina 29745 (US)
(74) Representative: Estreen, Lars

(57) **Abstract**

A turf machine is disclosed having a body with an engine and a mower deck. The turf machine has a plurality of track drives coupled to the engine. The turf machine further has a forward power coupling which transfers power from the engine to the mower deck.

## Description

### CROSS-REFERENCE TO RELATED APPLICATIONS

This application claims the benefit of U.S. Provisional Application No. 60/446,902, filed on February 11, 2003. The disclosure of the above application is incorporated herein by reference.

### FIELD OF THE INVENTION

This invention relates generally to turf care equipment, and more particularly, to a drive mechanism for a turf machine having an endless track drive unit.

### BACKGROUND AND SUMMARY OF THE INVENTION

Many pieces of turf equipment (including but not limited to residential lawn mowers and particularly larger commercial turf care machines) are equipped with drive mechanisms for providing power driving operation. Such machines generally include a clutch mechanism which may be engaged by the operator to transfer driving torque from a source of power, usually an internal combustion engine, to one or more drive wheels. Critical to a drive system for turf equipment, is the ability to regulate the drive torque of a particular vehicle while not causing damage to the underlying turf. In this regard, the drive wheels of the turf care equipment must be able to maintain contact with the ground when the turf is wet. Additionally, the drive system must be configured to allow the turf care equipment to be able to ascend small hills during a cutting operation, without allowing slippage of the wheels.

Turf machines also often include large diameter drive wheels in their drive system. These drive wheels are driven in pairs or individually utilizing hydrostatic or combustion engines. Selective transient application of very amount of torque assists the operator in maneuvering the turf machine. However, when turf conditions change, usually by amount of moisture in the turf or the slope of the ground being treated, it is desirable to vary the amount of torque being applied to the wheels without causing damage to the turf. Also, when operating the machine on a hill or grade, it is again desirable to be able to increase the amount of torque, particularly when the machine is moving, such that it does not allow the rotation the driven wheels to cause slip.

As can be appreciated, turf machine operators have attempted a number of solutions to the above described problem. Some of these include providing drive belt tension varying systems, turning the machine sideways to the hill, significantly increased drive tire diameter. These solutions are undesirable and inconvenient. If modifying the tire tread configuration is also undesirable in that the modified tread often leads to significant turf damage.

Thus, it is an object of the apparatus of the present invention to provide a turf machine having a body with an engine and a mower deck. The turf machine has a plurality of track drives coupled to the engine. It is a further object of the apparatus of the present invention to provide an improved traction mechanism which allows for improved traction, mobility and reduced turf damage.

In accordance with a first embodiment of the present invention, a turf machine is disclosed having a body with an engine and a mower deck. The turf machine has a plurality of track drives coupled to the engine. The turf machine further has a forward power coupling which transfers power from the engine to the mower deck.

In accordance with a second embodiment of the present invention, a turf machine is disclosed having an articulated body with an engine and a mower deck. The turf machine has a plurality of driven track drives coupled to the engine. The turf machine further has a forward power coupling which transfers power from the engine to the mower deck.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 represents a perspective view of a turf care machine utilizing the drive system according to the teachings of the present invention;

Figure 2 represents a side view of the turf care equipment is shown in Figure 1;

Figures 3a and 3b represent side and bottom views of the footprint of varying drive mechanisms; and

Figure 4 represents an alternate embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

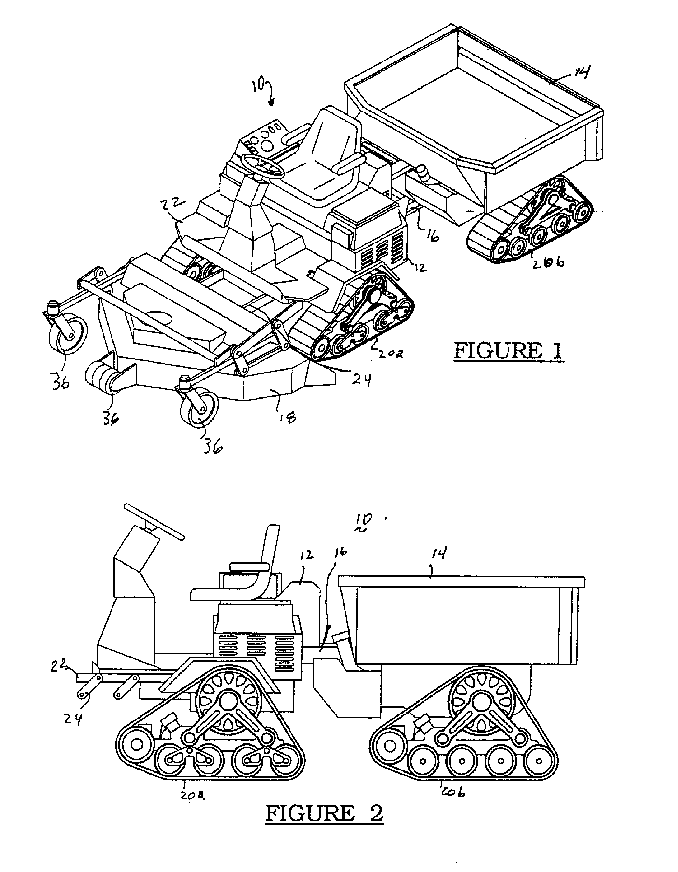

Figures 1 and 2 represent perspective and side views of a turf care machine utilizing the drive system according to the teachings of the present invention. The conventional elements of turf machine 10 are fully described in Steiner Ultrimax Commercial Mower UM 428 Parts Manual, a publicly available document, and thus, further description of these conventional elements is not provided. The present invention is being described in a preferred embodiment adapted to a particular drive mechanism of a turf machine. It should be understood and appreciated that the drive mechanism of the present invention is adaptable to any number of turf machine drive mechanisms including, but not limited to, multiple-speed transmissions, worm gear drives, hydrostatic drives, various other types of belt drives and the like.

The turf care machine 10 is formed of the front portion 12 and a rear portion 14 coupled together by an articulating member 16. Coupled to the front portion 12 is a mower deck 18. The turf care machine 10 as shown is driven by four continuous belt track units 20 which are coupled to an internal combustion engine (not shown) disposed within the front portion 12 of the turf care machine 10.

Provided on the leading edge 22 of the front portion 12 is a forward powered coupling 24, which functions to couple and power powered implements to the turf care machine 10, in this regard, while a mower deck 18 is shown, it is envisioned that other power instruments such as but not limited to an aerator, a powered angle blade, a blower, a sweeper, a chipper shredder, a disk edger or, a sprayer, stump cutter, a tiller, a trencher, or a vertical auger can be coupled to the front portion 12 and powered coupling 24.

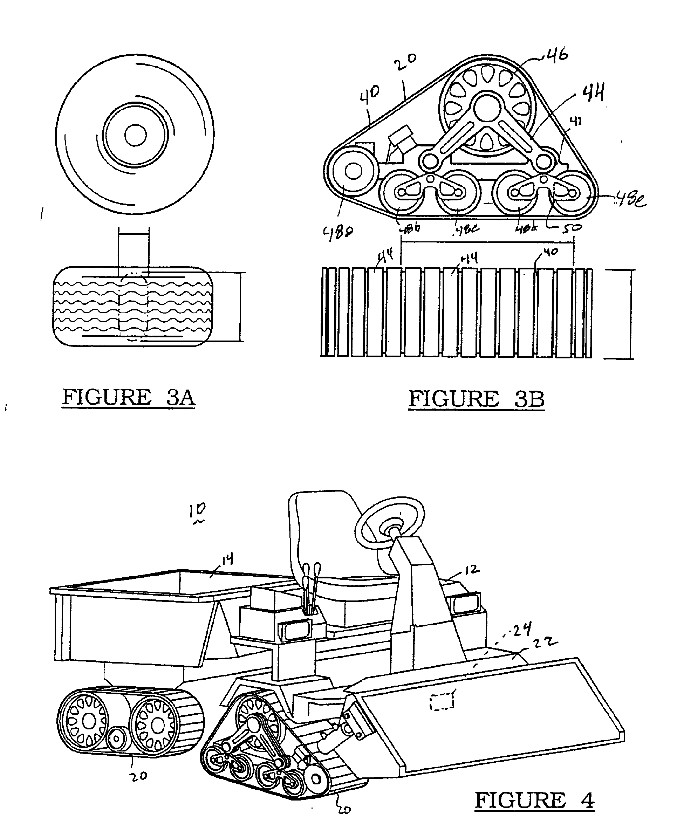

Turf machine 10 receives power from an internal combustion engine or a hydrostatic engine 22 mounted to an engine deck 24 which provides driving torque via a suitable transmission (not shown). This transmission can be a direct or indirect drive system using drive pulleys, belts and wheel pulleys to drive the track units 20. Driving torque from engine is further coupled through a suitable torque transmission device (not shown) to mower cutting deck 18 for driving one or more cutting blades (not shown). Turf machine 10 is adjustably supported for changing the mowing height of cutting deck 18 on track units 20, and forward caster wheels 36. It is envisioned that the rear portion 14 can have driven track units 20 (as shown in Figures 1 and 2) or can have non-driven track unit (as shown in Figure 4).

The track unit 20 comprises four track belts 40, preferably constructed of rubber, two on each side of the centrally located track fin 42. Traction bars 44 are attached to track belts 40 using standard fasteners. A sprocket 46 is attached to the front 12 of the turf machine 10. A body 44 is connected via pivot pins to the vehicle suspension (not shown). The body 44, the track frame 46, are pivotally coupled to a plurality of idler pulleys 48a-e. The idler pulleys 48a-e are attached to the lower face of the track frame 50. The belts 40 are wound around the outer peripheries of the sprocket 46, the front idler 48a, the rear idler 48e, and the rollers 48b-d. The driven track 20 in a generally triangular track run, but can have a non-triangular or oval track.

Figures 3a and 3b represent side and bottom views of the footprint of the various drive mechanisms. Figure 3a depicts the foot print of a standard tire used in mowing systems. As the turf machine 10 is traditionally supported on four wheels, significant pressure is applied onto the turf. This pressure can scuff or damage the underlying turf grass. Figure 3b disclosed the footprint of the track 20 according to the present invention. As can be seen, the surface area of the track 20 is significantly greater than standard tires. A standard truck with tires will exert up to 40 p.s.i. of down pressure on its tire contact area. A person standing will exert 6 to 8 p.s.i. of down pressure. The track 20 on a turf machine exerts a downward pressure of less than 8 p.s.i. and preferably as low as 1.5 p.s.i. This eliminates compaction of the turf grass and the formation of ruts within the turf.

The turf machine 10 is disclosed having an articulated body with an engine and a mower deck. The turf machine has a pair of front driven track drives 20a coupled to the first portion 12, and a second pair of track drives 20b coupled to the second portion 14. The articulating member 16 allows the use of the track drives 20a coupled to the turf machine steering system. In this regard, turf machines frequently must stop and change direction from a standing position. Normally, when both the left and right tracks 20 are driven in the same direction, the increased contact surface area of the tracks of a vehicle dictate that the vehicle must be traveling forward or backward to turn the vehicles steering mechanism. The use of the articulated body allows an operator to steer the turf machine prior to engagement of the drive mechanism. While the turf machine 10 shown utilizes a steering wheel, it is envisioned the system can use a pair of separate controllers which can individually control the left and right tracks 20.

The description of the invention is merely exemplary in nature and, thus, variations that do not depart from the gist of the invention are intended to be within the scope of the invention. Such variations are not to be regarded as a departure from the spirit and scope of the invention.

## Claims

1. A self-propelled turf care machine comprising:
a body with an engine and a mower deck; and
a plurality of track drives coupled to the engine.

2. The self-propelled turf care device according to Claim 1 wherein the body comprises a first body portion coupled to a second body portion by an articulating joint.

3. The self-propelled turf care machine according to Claim 1 wherein the track drives exert downward pressure of less than 8 p.s.i. onto a turf surface.

4. The self-propelled turf care machine according to Claim 1 wherein the body has a front portion having a first pair of track drives and a second portion coupled to the first portion by an articulating joint.

5. The self-propelled turf care machine according to Claim 4 wherein the second portion has a pair of track drives coupled to the engine.

6. The self-propelled turf care machine according to Claim 4 wherein the second portion has a pair of track drives.

7. The self-propelled turf care machine according to Claim 4 wherein the front portion comprises a power coupling which functions to couple a powered implement to the turf care machine.

8. The self-propelled turf care machine according to Claim 7 wherein the powered implement is selected from a group comprising a grater, a powered angular blade, a blower, a sweeper, a chipper shredder, a disk edger, a sprayer, a stump grinder, a trencher, a vertical auger, or combinations thereof.

9. A self-propelled turf care machine comprising an engine:
a body supporting the engine, the body having a front portion and a rear portion pivotally coupled to the front portion, the front portion having a powered turf care implement coupled to the engine; and
a track drive coupled to the engine.

10. The self-propelled turf care machine according to Claim 9 wherein the front portion comprises the track drive.

11. The self-propelled turf care machine according to Claim 9 wherein the rear portion comprises a second track drive.

12. The self-propelled turf care machine according to Claim 11 wherein the second track drive is operably coupled to the engine.

13. The system according to Claim 11 wherein the second track drive is coupled to the engine by a transmission.

14. The self-propelled turf care machine according to Claim 9 wherein the powered turf care implement is a lawn mower head.

15. The self-propelled turf care machine according to Claim 9 wherein the track drive system is coupled to the engine by a pulley and belt system.

16. The system according to Claim 9 wherein the track drive comprises a pair of belts disposed adjacent a central support fin.

17. The system according to Claim 16 wherein the track drive comprises an idler pulley.

18. The system according to Claim 9 wherein the track drive comprises a triangular track.

19. The system according to Claim 9 wherein the track drive comprises an oval track.

20. The system according to Claim 9 wherein the track drive exerts less than 8 p.s.i. onto a turf grass surface.

21. The self-propelled turf care machine according to Claim 11 further comprising a mechanism for changing the mowing height of a cutting deck.
